# EUROPEAN PATENT APPLICATION

(11) **EP 3 832 789 A1**
(43) Date of publication of application: **09.06.2021**
(21) Application number: 20211477.3
(22) Date of filing: 03.12.2020
(51) Int. Cl.: H01M 50/503, B23K 11/14, B23K 11/20, H01M 50/516, H01M 50/522, H01M 50/526, H01R 4/02, H01R 4/62, H01R 43/02

(54) **CONDUCTIVE CELL FRAME**

(30) Priority: 04.12.2019 CN 201911230190
(71) Applicant: STL Technology Co., Ltd., Kaohsiung City 80681 (TW)
(72) Inventor: Chang, Cooper, 80681 Kaohsiung City (TW)
(74) Representative: Baldwin, Mark

(57) **Abstract**

A conductive cell frame for connecting a plurality of battery cells is disclosed. The conductive cell frame includes a first conductive portion and a plurality of second conductive portions, and the upper surface of each second conductive portion is connected to the first conductive portion through a eutectic portion. The lower surface of each second conductive portion is provided with at least one protruding welding portion, wherein the second conductive portion is connected to the housing of the battery cell through the protruding welding portion. The first conductive portion and the second conductive portion are made of different materials, wherein the resistance of the second conductive portion is greater than the resistance of the first conductive portion. Thus, a small current can be used to connect to the conductive cell frame and the battery cell, which not only reduces the consumption of energy, but also avoids damage of the battery cell during the electric welding process.

## Description

### TECHNICAL FIELD

The present disclosure relates to a conductive cell frame for connecting battery cells, more particularly, to a conductive cell frame that prevents the battery cells from being damaged during connecting process.

### BACKGROUND

Examples of secondary cells include nickel-metal hydride (NiMH) batteries, nickel-cadmium (NiCd) batteries, lithium-ion (Li-ion) batteries, and lithium-ion polymer (Li-Poly) batteries, wherein lithium-ion batteries have advantages like high energy density, high operation voltage, wide utility temperature range, no memory effect, long battery life, capable of being charged/discharged numerous times and so on. Lithium-ion batteries are widely used in portable electronics, such as cellular phones, laptop computers, and digital cameras, and their use has even been expanded to the automobile industry in recent years.

A battery cell is mainly composed of anode material, electrolyte, cathode material, a separator and a housing. The separator separates the anode material and the cathode material to prevent short-circuits and the electrolyte is disposed in the porous separator for conducting ionic charge. The housing encases the anode material, the separator, the electrolyte, and the cathode material and is usually made of metal materials.

A conductive cell frame is often used for connecting a plurality of battery cells in series and/or in parallel to form a battery pack that is capable of outputting a voltage required by a product. Generally, the conductive cell frame and the battery cell are connected by electric welding, during which the temperatures of the conductive cell frame and the battery cell need to be raised and the conductive cell frame applies force or pressure onto the housing at the anode or cathode of the battery cell to complete the connection between the conductive cell frame and the battery cell. During the connecting process of the conductive cell frame and the battery cell mentioned above, the housing of the battery cell is likely to be damaged due to the application of large forces or overheating, and in turn the battery cell is damaged.

### SUMMARY

An object of the present disclosure is to provide a conductive cell frame that includes a first conductive portion and a plurality of second conductive portions, wherein the first conductive portion is connected to the second conductive portion through a weld, for example, a eutectic portion. The first conductive portion and the second conductive portion are made of different metal materials, wherein an electrical resistance of the second conductive portion is greater than an electrical resistance of the first conductive portion. Through the implementation of the conductive cell frame of the present disclosure, energy consumption during an electric welding process of the conductive cell frame and the battery cell is decreased and damage to the battery cell structure is reduced as well. Hence, the product yield and reliability are enhanced.

An object of the present disclosure is to provide a conductive cell frame that mainly includes a first conductive portion and a plurality of second conductive portions, wherein the second conductive portion is completely overlapped by the first conductive portion to form a projection/bulge on the surface of the first conductive portion. The conductive cell frame is connected to the battery cell through the second conductive portion, wherein a gap is formed between the first conductive portion and the battery cell such that the electrolyte gas (gas of the battery fluid) ejected from a bad battery cell can be expelled through the gap. Thus, the possibility of the electrolyte gas contacting the conductive cell frame or other battery cells is reduced and so are the damage that may be caused therefrom.

An object of the present disclosure is to provide a conductive cell frame for connecting a plurality of battery cells in series and/or in parallel, wherein the battery cell includes an anode, a cathode and an insulation ring for isolating the cathode and the anode. The conductive cell frame is connected to the anode of the battery cell through a second conductive portion, wherein the cross-sectional area of the second conductive portion is smaller than the cross-sectional area of the anode or the encircled region formed by the insulation ring.

An object of the present disclosure is to provide a conductive cell frame that includes a first conductive portion, a plurality of welded portions, a plurality of conductive portions, and at least one protruding welding portion. The second conductive portion includes a first surface and a second surface, wherein the first surface of the second conductive portion is connected to the first conductive portion through the welded portion. The at least one protruding welding portion is disposed on the second surface of the second conductive portion and is used for connecting to a battery cell. The first conductive portion and the second conductive portion are of different materials, and the electrical resistance of the second conductive portion is greater than the electrical resistance of the first conductive portion.

Preferably, the second conductive portion includes at least one recess portion disposed on the first surface of the second conductive portion and the location of the recess portion corresponds to the location of the protruding welding portion.

Preferably, the second conductive portion and the first conductive portion are partially overlapped.

Preferably, the first conductive portion and the protruding welding portion on the second conductive portion are not overlapped.

Preferably, the second conductive portion is completely overlapped by the first conductive portion and formed a bulge on a surface of the first conductive portion to create a gap between the first conductive portion and the battery cell connected to the protruding welding portion.

Preferably, the battery cell includes an insulation ring for separating an anode and a cathode of the battery cell and the insulation ring has an encircled region in which the anode of the battery cell is located, and the cross-sectional area of the second conductive portion is smaller than or equal to the cross-sectional area of the anode or the encircled region of the insulation ring.

Preferably, the second conductive portion includes at least one recess portion disposed on the first surface of the second conductive portion and the location of the recess portion corresponds to the location of the protruding welding portion. The welded portion is connected to the first surface and the recess portion of the second conductive portion. The weld may be a eutectic portion.

Preferably, the first conductive portion includes a plurality of branches respectively connected to the plurality of second conductive portions.

Preferably, the first conductive portion includes a plurality of branches, and each branch includes a plurality of sub-branches and is connected to one of the second conductive portions through the sub-branches.

Preferably, the thickness or the cross-sectional area of the second conductive portion is smaller than the thickness or the cross-sectional area of the first conductive portion.

Embodiments of the present disclosure include a conductive cell frame comprising a first conductive portion made from a first material having an electrical resistance, a plurality of second conductive portions made from a material different to the first material of the first conductive portion and having an electrical resistance that is greater than the electrical resistance of the first electrical portion, wherein respective first surfaces of the second conductive portions are joined to the first conductive portion by respective welds and the respective second surfaces of the second conductive portions are provided with at least one projecting formation for welding to a battery cell.

Embodiments of the present disclosure include a method of connecting a conductive cell frame to a battery cell, wherein the conductive cell frame comprises a first conductive portion having a first electrical resistance and a second conductive portion having a second electrical resistance that is higher than the electrical resistance of the first electrical portion and the method comprises electrical resistance welding said first conductive portion to a first side of said second conductive portion and electrical resistance welding a second side of said second conductive portion to a housing of said battery cell.

The conductive frame may be connected to a plurality of said battery cells, in which case, there are a plurality of said second conductive portions and each battery cell is connected to said first conductive portion by electrical resistance welding the second side of at least one of said second conductive portions to the respective housing of the battery cell and first side of the at least one second conductive portion to the first conductive portion. In some embodiments, the first conductive portion comprises respective branches for connecting with the battery cells and each branch comprises a plurality of sub-branches, wherein each sub-branch is connected with the respective battery cell by respective said second conductive portions.

The battery or each cell may comprise an insulation ring separating an anode and a cathode and defining an encircled region containing the anode, wherein the welded connection between the second side of each second conductive portion and the respective battery cell is contained within the encircled region.

### BRIEF DESCRIPTION OF THE DRAWINGS

The structure as well as preferred modes of use, further objects, and advantages of this present disclosure will be best understood by referring to the following detailed description of some illustrative embodiments in conjunction with the accompanying drawings, in which:
Fig. 1 is a top view of a conductive cell frame according to an embodiment of the present disclosure.
Fig. 2 is a side view of a conductive cell frame and a battery cell of Fig. 1.
Fig. 3 is a side view of a conductive cell frame of Fig. 1 connected with a battery cell.
Fig. 4 is a top view of a conductive cell frame according to another embodiment of the present disclosure.
Fig. 5 is a top view of a conductive cell frame according to yet another embodiment of the present disclosure.
Fig. 6 is a side view of a conductive cell frame of Fig. 5 and a battery cell.
Fig. 7 is a side view of the conductive cell frame of Figs. 5 and 6 connected with a battery cell.
Fig. 8 is a top view of a conductive cell frame according to yet another embodiment of the present disclosure.

### DETAILED DESCRIPTION

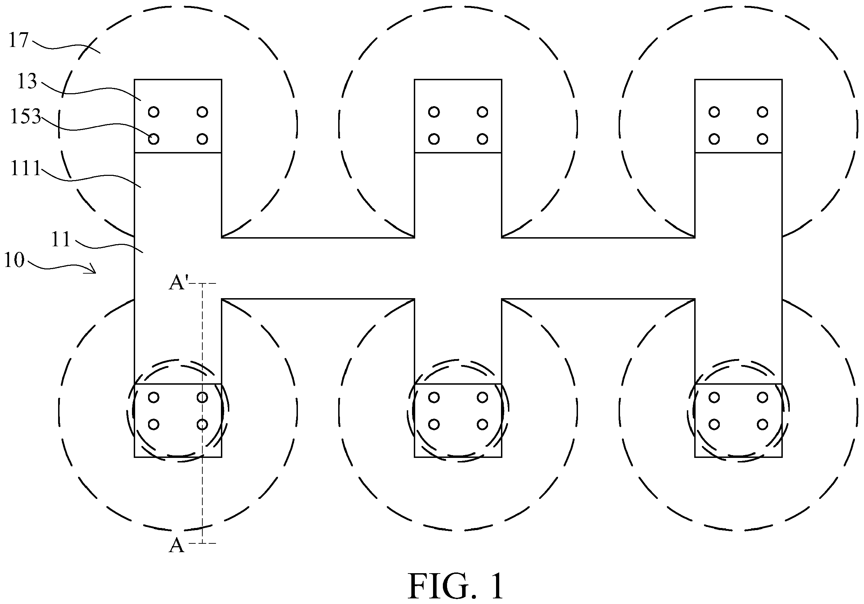

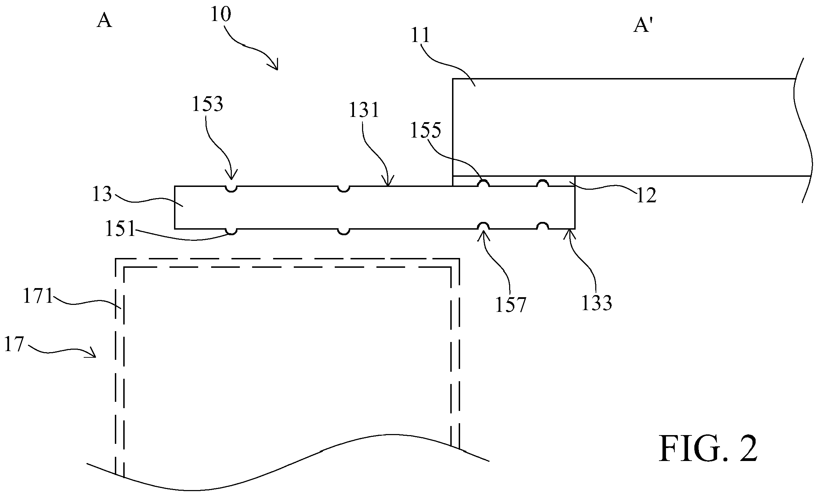

Referring to Figs. 1 and 2, a conductive cell frame 10 includes a first conductive portion 11, at least one second conductive portion 13 and at least one protruding welding portion 151. The first conductive portion 11 and the second conductive portion 13 are made of different materials and are connected through/joined by a eutectic portion 12. In other words, there are a plurality of eutectic portions 12 and each eutectic portion 12 forms one connection/joint between the first conductive portion 11 and a respective second conductive portion 13.

The second conductive portion 13 includes a first surface 131 and a second surface 133, which can, for example, be two opposite surfaces on the second conductive portion 13. Parts of the first surface 131 of the second conductive portion 13 are connected to/joined with the first conductive portion 11 through a eutectic portion 12, thus forming the main structure of the conductive cell frame 10. The first conductive portion 11 and the second conductive portion 13 are connected or joined by processes like welding.

In one embodiment, at least one protruding welding portion 155 is disposed on the first surface 131 of the second conductive portion 13. The protruding welding portion 155 can be a bump or projection protruding from the first surface 131 of the second conductive portion 13. The second conductive portion 13 is connected/joined to the first conductive portion 11 through the protruding welding portion 155. In practice, the first conductive portion 11 and the second conductive portion 13 are connected/joined by a resistance welding process. The protruding welding portion 155 on the first surface 131 of the second conductive portion 13 is placed/put in contact with the lower surface of the first conductive portion 11 and electric current is passed to the second conductive portion 13 through the first conductive portion 11, thereby raising the temperature of the protruding welding portion 155 on the second conductive portion 13 and the temperature of the first conductive portion 11 in contact therewith, and forming the eutectic portion 12 between the first conductive portion 11 and the second conductive potion 13.

Moreover, at least one protruding welding portion 151 is disposed on the second surface 133 of the second conductive portion 13. The protruding welding portion 151 is a bump/projection protruding from the second surface 133 of the second conductive portion 13. The second conductive potion 13 is connected to a housing 171 of a battery cell 17 via the protruding welding portion 151 and, for example, connected to the anode or the cathode of the housing 171.

In one embodiment, the protruding welding portions 155/151 are formed respectively on the first surface 131 and the second surface 133 of the second conductive portion 13 by stamping or pressing processes and at least one recess portion 157/153 is formed on each of the second surface 133 and the first surface 131 of the second conductive portion 13. The location of the recess portions 157/153 corresponds to the location of the protruding welding portions 155/151. That is to say, a recess 157/153 is disposed generally opposite to a prospective protruding welding portion 155/151.

It is to be noted that making the second conductive portion 13 by a stamping/pressing process is merely an embodiment of the present disclosure, and the scope of the present disclosure is not limited thereby. Thus, the present disclosure is not limited to the first surface 131 and the second surface 133 of the second conductive portion 13 having at least one recess portion 153/157 thereon. In practice, the second conductive portion 13 can be made by other methods, such as casting, and so there won't be any recess portion 153/157 on the first surface 131 and the second surface 133 of the second conductive portion 13.

In one embodiment, the second conductive portion 13 and the first conductive portion 11 are partially overlapped. The first conductive portion 11 and the protruding welding portion(s) 151 and/or the recess portion(s) 153 on the second conductive portion 13 are not overlapped. Specifically, the at least one protruding welding portion 151 and/or the at least one recess portion 153 are disposed on the region of the second conductive portion 13 that is not overlapped with the first conductive portion 11 so that the eutectic portion 12 that connects/joins the first conductive portion 11 and the second conductive portion 13 is not in contact with or does not touch the recess portion(s) 153 of the second conductive portion 13.

In practice, welding, which is a technique that joins different metals by using high heat or high pressure, is mainly used to connect/join the second conductive portion 13 and the protruding welding portion 151 to the housing 171 of the battery cell 17.

In one embodiment, the second conductive portion 13, the protruding welding portion 151 and the housing 171 of the battery cell 17 are connected/joined by a resistance welding process. First, the protruding welding portion 151 on the second conductive portion 13 is placed/put in contact with the battery cell 17, for example, in contact with the housing 171 at the location of the anode or the cathode of the battery cell 17. The housing 171 is made of a metal material.

Next, electric current is supplied to the second conductive portion 13, the protruding welding portion 151 and the housing 171 of the battery cell 17, all of which are made of metal materials and have electrical resistances. Therefore, when the electric current passes through the second conductive portion 13, the protruding welding portion 151 and the housing 171 of the battery cell 17, there is an increase in the temperature of the protruding welding portion 151 and the temperature of the housing 171 of the battery cell 17 in contact therewith.

When the temperatures of the second conductive portion, the protruding welding portion 151 and the housing 171 of the battery cell 17 reach a specific value, a pool of molten material, or a weld pool, is formed. Force or pressure is then applied to the housing 171 of the battery cell 17 through the second conductive portion 13 and the protruding welding portion 151 such that the protruding welding portion 151 on the second conductive portion 13 is pressed and sunk into the housing 171 of the battery cell 17. After the second conductive portion 13, the protruding welding portion 151 and the housing 171 of the battery cell 17 have cooled down, the connection between the second conduction portion 13 and the battery cell 17 is complete.

Conductive cell frames are often made of materials with low electrical resistance and high conductivity to reduce the energy loss from charging and discharging the battery cell through the conductive cell frame. When connecting a conductive cell frame having low resistance with the housing of the battery cell by resistance welding, a relatively large electric current must be supplied to the conductive cell frame and the housing of the battery cell, so the energy consumption during welding of the conductive cell frame and the battery cell is high.

Moreover, such conductive cell frames usually have a greater thickness for increasing the cross-sectional area of the conductive cell frame so as to reduce the resistance of the conductive cell frame. But as the thickness of the conductive cell frame increases, the structural strength of the conductive cell frame is also enhanced, making the conductive cell frame harder to deform when connecting to the housing of the battery cell. Thus, when the conductive cell frame applies force or pressure onto the housing of the battery cell, the housing of the battery cell suffers greater deformation. For example, the protruding welding portion on the conductive cell frame would make a deeper or wider cavity in the housing of the battery cell.

Hence, the housing structure of the battery cell could be damaged during the connecting process of the conductive cell frame and the battery cell and the reliability and durability of the battery cell is thus affected. The damage to the housing may, for example, comprise the formation of metal cracks on the housing of the battery cell. Conversely, if a conductive cell frame with high electrical resistance and low conductivity is selected in an attempt to avoid the aforementioned issue, the energy loss during the charging and discharging of the battery cell through the conductive cell frame will increase.

To solve the aforementioned issue, the present disclosure provides conductive cell frames 10 that are made of two different materials. Thus, the first conductive portion 11 and the second conductive portion 13 are made of different materials and the electrical resistance and/or the resistivity of the second conductive portion 13 is greater than that of the first conductive portion 11. In other words, the electrical conductivity of the first conductive portion 11 is higher than the conductivity of the second conductive portion 13. For example, the first conductive portion 11 may be made of copper and the second conductive portion 13 may be made of nickel.

Since the second conductive portion 13 has a greater resistance, a relatively small, or lower, current can be supplied to the second conductive portion 13 when connecting the second conductive portion 13 of the conductive cell frame 10 to the contacted housing 171 of the battery cell 17. That is to say that the electrical current required to weld the second conductive portion to the housing is lower than the current that would be needed to weld the first conductive portion directly to the housing. Therefore, resistance welding processes can be used to connect/join the second conductive portion 13 and the housing 171 of the battery cell 17 so as to effectively reduce the energy consumed during the connecting/joining process of the conductive cell frame 10 and the battery cell 17.

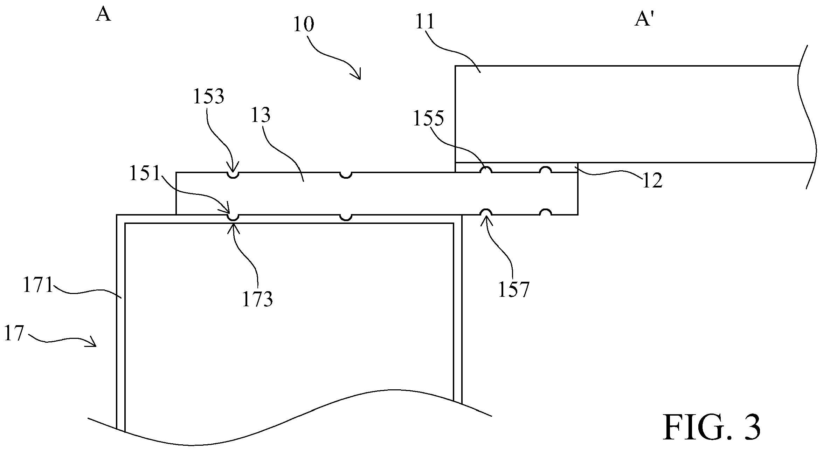

Furthermore, the thickness of the second conductive portion 13 is reduced to lessen the structural strength of the second conductive portion 13. In one embodiment, the thickness, or the cross-sectional area, of the second conductive portion 13 is smaller than the thickness, or the cross-sectional area, of the first conductive portion 11. When connecting/joining the second conductive portion 13 with the housing 171 of the battery cell 17 by resistance welding, both the second conductive portion 13 and the housing 171 of the battery cell 17 will deform so as to reduce the degree of deformation on the housing 171 of the battery cell 17. As shown in Fig. 3, the protruding welding portion 151 on the second conductive portion 13 is deformed during the resistance welding process and the thickness and/or area of a deformed portion 173 caused by the protruding welding portion 151 forcing/pressing on the housing 171 of the battery cell 17 is reduced. Hence, damage to the housing structure 171 of the battery cell 17, like formation of metal cracks on the housing 171 of the battery cell 17, can be avoided during the connecting/joining process of the conductive cell frame 10 and the battery cell 17, and the durability and reliability of the battery cell 17 are enhanced.

In addition, since the first conductive portion 11 has a lower electrical resistance value, there is no substantial increase in the electrical resistance value of the conductive cell frame 10 with the addition of the second conductive portion 13. Accordingly, the energy loss caused by the conductive cell frame 10 during charging and discharging the battery cell 17 is reduced.

In the embodiment shown in Fig. 1, the first conductive portion 11 looks like a fishbone and has a plurality of branches 111. Each of the branches 111 of the first conductive portion 11 is connected to one of the second conductive portions 13 through a respective eutectic portion 12. For example, the first conductive portion 13 in Fig. 1 includes six branches 111 and through the six branches 111 is connected to six second conductive portions 13. Each of the six conductive portions 13 is connected to a respective battery cell 17 and so the conductive cell frame 10 connects six battery cells 17 in series and/or in parallel.

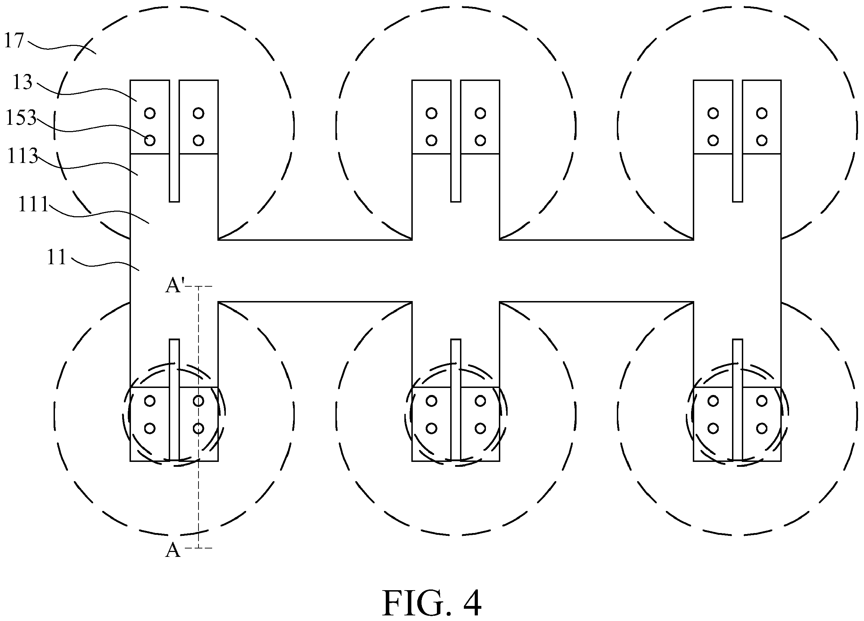

In another embodiment shown in Fig. 4, each branch 111 of the first conductive portion 11 comprises a plurality of sub-branches 113. Each of the sub-branches 113 is connected to a respective second conductive portion 13 such that each branch 111 of the first conductive portion 11 is connected to a plurality of second conductive portions 13. For example, the first conductive portion 11 in Fig. 4 includes six branches 111 and each branch 111 comprises two sub-branches 113. Each sub-branch 113 is connected to one second conductive portion 13, such that each branch 111 is connected to one battery cell 17 through two second conductive portions 13.

It is to be noted that the present disclosure does not limit the number of the branches 111 and the sub-branches 113 of the first conductive portion 11 and the number of the second conductive portions 13 and the battery cells 17 connected to the first conductive portion 11.

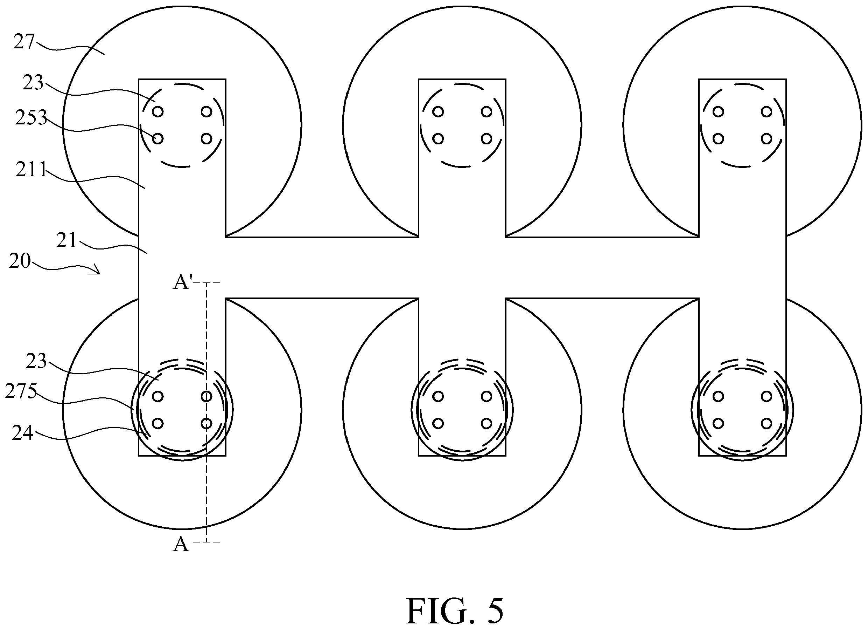

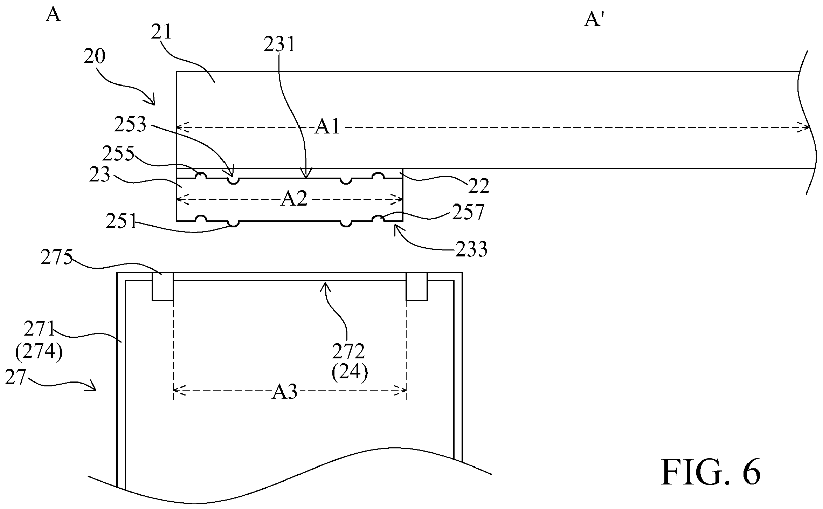

Referring to Figs. 5 and 6, according to another embodiment of the present disclosure, a conductive cell frame 20comprises a first conductive portion 21, at least one second conductive portion 23 and at least one protruding welding portion 251. The first conductive portion and the second conductive portion 23 are made of different materials and are connected through/joined by a eutectic portion 22. In other words, there is at least one eutectic portion 22 as one eutectic portion 22 corresponds to one connection/joint between the first conductive portion 21 and a second conductive portion 23.

The second conductive portion 23 includes a first surface 231 and a second surface 233. The first surface 231 of the second conductive portion 23 is connected to/joined with the first conductive portion 21 through the eutectic portion 22 and thus the main structure of the conductive cell frame 20 is formed.

In one embodiment, at least one protruding welding portion 255 is disposed on the first surface 231 of the second conductive portion 23. The protruding welding portion 255 is a bump/projection that protrudes from the first surface 231 of the second conductive portion 23 and the second conductive portion 23 is connected to/joined with the first conductive portion 21 through the protruding welding portion 255. In practice, the first conductive portion 21 and the second conductive portion 23 are connected/joined by resistance welding. The protruding welding portion 255 on the first surface 231 of the second conductive potion 23 is placed/put in contact with the lower surface of the first conductive portion 21, and by supplying electric current to the second conductive portion 23 through the first conductive portion 21, the temperatures of the protruding welding portion 255 and the contacted first conductive portion 21 are raised and the eutectic portion 22 is formed between the first conductive portion 21 and the second conductive portion 23.

In the embodiment shown in Fig. 6, the cross-sectional area (obtained by cutting along line A2) of the second conductive portion 23 is smaller than the cross-sectional area (obtained by cutting along cutting along line A1) of the first conductive portion 21. The second conductive portion 23 is completely/fully overlapped by the first conductive portion 21, so that the entire first surface 231 and/or second surface 233 of the second conductive portion 23 is overlapped by the first conductive portion 21 so as to form a bulge, or projection, on the surface of the first conductive portion 21. After the second conductive portion 23 is connected to/joined with the first conductive portion through the eutectic portion 22, the second conductive portion 23 forms a bulging, or projecting, conductive portion on a surface, such as the lower surface, or underside, of the first conductive portion 21.

At least one protruding welding portion 251 is disposed on the second surface 233 of the second conductive portion 23. The protruding welding portion 251 is a bump/projection that protrudes from the second surface 233 of the second conductive portion 23. At least one recess portion 253 is disposed on the first surface 231 of the second conductive portion 23. The location of the at least one recess portion 253 corresponds to the location of the at least one protruding welding portion 251. That is, a recess portion 253 is disposed generally opposite each protruding welding portion 251. In other embodiments, there is no recess portion 253 disposed on the first surface 231 of the second conductive portion 23.

Since the second conductive portion 23 is completely/fully overlapped by the first conductive portion 21, the protruding welding portion 251 and/or the recess portion 253 on the second conductive portion 23 also overlaps with, or is covered by, the first conductive portion 21. When the first surface 231 of the second conductive portion 23 is provided with a recess portion 253, the eutectic portion 22 connecting/joining the first conductive portion 21 and the second conductive portion 23 is only formed on the first surface 231 of the second conductive portion 23 and there is no eutectic portion 22 in the recess portion 253. In other embodiments, the eutectic portion 22 is formed both on the first surface 231 and in the recess portion 253 of the second conductive portion 23. In other words, the eutectic portion 22 is connected to the first surface 231 and the recess portion 253.

In one embodiment, the second conductive portion 23, the protruding welding portion 251 and the housing 271 of the battery cell 27 are connected/joined by resistance welding so as to complete the connection between the second conductive portion 23 and the battery cell 27. The conductive cell frame 20 is made of two different materials, with the electrical resistance and/or the resistivity of the second conductive portion 23 being greater than that of the first conductive portion 21. In other words, the conductivity of the first conductive portion 21 is greater than that of the second conductive portion 23. For example, the first conductive portion 21 may be made of copper and the second conductive portion 23 may be made of nickel.

Therefore, when connecting the conductive cell frame 20 and the contacted battery cell 27 by resistance welding, the electric current supplied from the first conductive portion 21 to the second conductive portion 23 and the housing 271 of the battery cell 27 can be lowered and so the energy consumption of connecting the conductive cell frame 20 and the battery cell is effectively reduced..

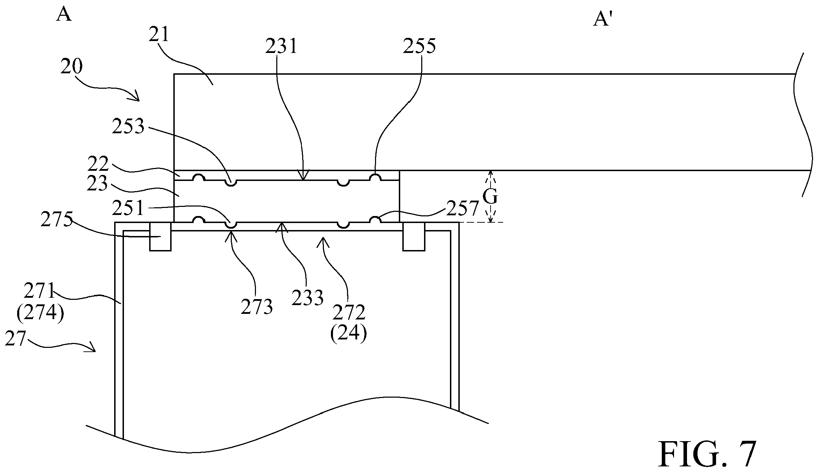

Moreover, the thickness of the second conductive portion 23 is decreased and the structural strength of the second conductive portion 23 is thereby lessened, such that the protruding welding portion 251 on the second conductive portion 23 also deforms during the resistance welding process. Therefore, the depth or area of the deformed portion 273 (Fig. 7) caused by the force or pressure applied by protruding welding portion 251 on the housing 271 of the battery cell 27 is reduced and the damage to the housing structure of the battery cell 27 during the connecting process is avoided.

In the embodiment shown in Fig. 5, the first conductive portion 21 has a fishbone-like appearance that includes a plurality of branches 211, and each branch 211 of the first conductive portion 21 is connected to one second conductive portion 23 through a respective eutectic portion 22. Each second conductive portion 23 is completely overlapped by the branch 211 of the first conductive portion 21 to which it is connected.

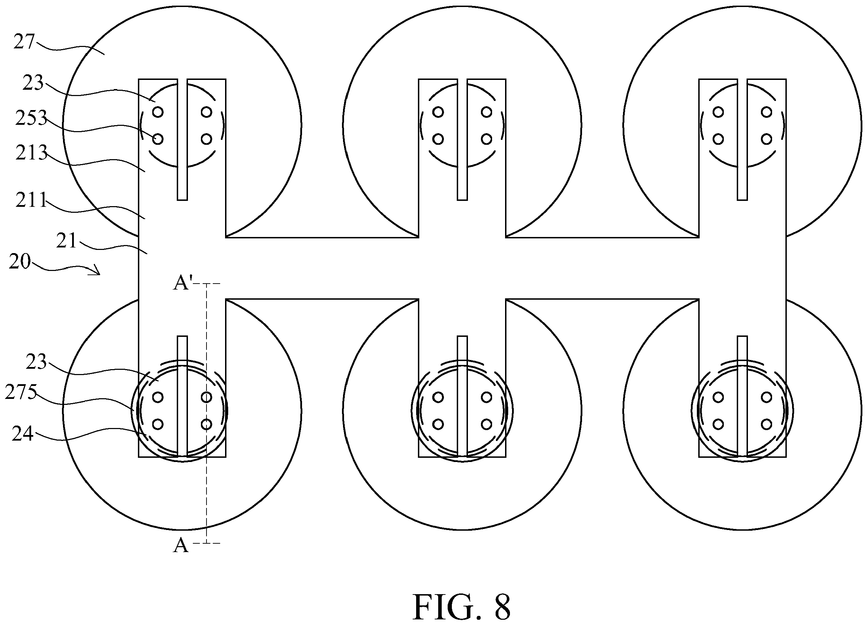

In another embodiment, as shown in Fig. 8, each branch 211 of the first conductive portion 21 comprises a plurality of sub-branches 213. Each of the sub-branches 213 is connected to one of the second conductive portions 23 such that each branch 211 of the first conductive portion 21 is connected to a plurality of second conductive portions 23 and is connected to a battery cell 27 through the plurality of second conductive portions 23.

It is to be noted that the present disclosure does not limit the number of the branches 211 and the sub-branches 213 on the first conductive portion 21 and the number of the second conductive portions 23 and the battery cells 27 connected to the first conductive portion 21.

As shown in Fig. 7, since the second conductive portion 23 is completely overlapped, or covered, by the first conductive portion 21 and protrudes from a surface, like the lower surface, or underside, of the first conductive portion 21, a gap G is formed/created between the first conductive portion 21 and the connected battery cell 27 when the conductive cell frame 20 is connected to the housing 271 of the battery cell 27 through the second conductive portion 23. If the battery cell 27 is damaged and ejects electrolyte gas (gas of the battery fluid), the ejected electrolyte gas is expelled through the gap G between the first conductive portion 21 and the battery cell 27, whereby the possibility or the length of time which the electrolyte gas comes in contact with the conductive cell frame 20 and/or other battery cells 27 is reduced and so damage of other battery cells 27 is minimized.

In one embodiment, the battery cell 27 includes an anode 272, a cathode 274 and an insulation ring 275 for separating the anode 272 and the cathode 274. More specifically, the insulation ring 275 forms an encircled region 24 and the anode 272 of the battery cell 27 is located inside the encircled region 24 defined by the insulation ring 275. The area of the anode 272 is smaller than or equal to the area of the encircled region 24. The cathode 274 is located outside of encircled region 24, external of the insulation ring 275.

In one embodiment, the cross-sectional area (obtained by cutting along line A2 and using the length of A2 for calculating the area) of the second conductive portion 23 is smaller than or equal to the cross-sectional area (obtained by cutting along line A3 and using the length of A3 for calculating the area) of the encircled region 24 inside the insulation ring 275. In other words, the cross-sectional area (obtained by cutting along line A2) of the second conductive portion 23 is smaller than or equal to the cross-sectional area (obtained by cutting along line A3) of the anode 272 in the battery cell 27. When the conductive cell frame 20 is connected to the anode of the battery cell 27, only the second conductive portion 23 is in contact with the anode located within the area encircled by the insulation ring 275.

Generally, when the battery cell 27 is damaged, the gas of the battery fluid inside the battery cell 27 will usually from the battery cell 27 from the insulation ring 275 which is the border between the anode 272 and the cathode 274. In this embodiment, because the second conductive portion 23 only connects to the anode 272 inside the insulation ring 275 and there is the gap G between the first conductive portion 21, the insulation ring 275 and the housing 271 of the battery cell 27, the gas of the battery fluid ejected from the battery cell 27 is expelled to the outside through the gap G.

The above disclosure is only the preferred embodiment of the present disclosure, and not used for limiting the scope of the present disclosure. All equivalent variations and modifications on the basis of shapes, structures and features described in claims of the present disclosure should be included in the claims of the present disclosure.

## Claims

1. A conductive cell frame (10; 20) comprising:
a first conductive portion (11; 21);
a plurality of second conductive portions (13; 23), each second conductive portion (13; 23) comprising a first surface (131; 231) and a second surface (133; 233), wherein the first surface (131; 231) of each second conductive portion (13; 23) is connected to the first conductive portion (11; 21) through a weld (12; 22); and
at least one protruding welding portion (151; 251) disposed on the second surface (133; 233) of each second conductive portion (13; 23) for connecting to a battery cell (17; 27);
wherein the first conductive portion (11; 21) and the second conductive portions (13; 23) are made of different materials and the electrical resistance of each second conductive portion (13; 23) is greater than the electrical resistance of the first conductive portion (11; 21).

2. The conductive cell frame of claim 1, **characterized in that** each second conductive portion (13; 23) comprises at least one recess portion (153; 253) disposed on the first surface (13; 231) of the second conductive portion (13; 23) and a location of the at least one recess portion (153; 253) corresponds to the location of the at least one protruding welding portion (151; 251).

3. The conductive cell frame of claim 1 or 2, **characterized in that** the first conductive portion (11; 21) comprises a plurality of branches (111; 211) connected to respective said second conductive portions (13; 23).

4. The conductive cell frame of claim 3, **characterized in that** each branch (111; 211) comprises a plurality of sub-branches (113; 213) and is connected to the respective second conductive portions (13; 23) through the plurality of sub-branches (113; 213).

5. The conductive cell frame of any one of the preceding claims, **characterized in that** the thickness or cross-sectional area of the second conductive portions (13; 23) is smaller than the thickness or cross-sectional area of the first conductive portion (11; 21).

6. The conductive cell frame of any one of the preceding claims, **characterized in that** the second conductive portions (13; 23) and the first conductive portion (11; 21) are partially overlapped.

7. The conductive cell frame of claim 6, **characterized in that** the first conductive portion (11) and the at least one protruding welding portions (151) on the second conductive portions (13) are not overlapped.

8. The conductive cell frame of claim 6, **characterized in that** the second conductive portions (23) are completely overlapped by the first conductive portion (21) such that the second conductive portions (23) form respective bulges on a surface of the first conductive portion (21) to create a gap (G) between the first conductive portion (21) and a said battery cell (27) connected to the protruding welding portion (251).

9. The conductive cell frame of claim 8, **characterized in that** each second conductive portion (23) comprises at least one recess portion (253) disposed on the first surface (231) of the second conductive portion (23), a location of the at least one recess portion (253) corresponds to a location of the at least one protruding welding portion (251), and the welds (22) are connected to the respective first surfaces (231) and the at least one recess portion (253) of the second conductive portions (23).

10. The conductive cell frame of claim 8 or 9 connected to a said battery cell (27), **characterized in that** the battery cell (27) comprises an insulation ring (275) to isolate an anode (272) and a cathode (274) of the battery cell (27), the insulation ring (275) defines an encircled region (24), the anode (272) is located in the encircled region (24), and a cross-sectional area of the second conductive portions (23) is smaller than or equal to a cross-sectional area of the encircled region (24) of the insulation ring (275) or a cross-sectional area of the anode (272).

11. The conductive cell frame of any one of the preceding claims, **characterized in that** each weld (12; 22) is a eutectic portion.

12. A method of connecting a conductive cell frame (10; 20) to a battery cell (17; 27), **characterized in that** the conductive cell frame (10; 20) comprises a first conductive portion (11; 21) having a first electrical resistance and a second conductive portion (13; 23) having a second electrical resistance that is higher than the electrical resistance of the first electrical portion (11; 21), and the method comprises electrical resistance welding said first conductive portion (11; 21) to a first surface (131; 231) of said second conductive portion (13; 23) and electrical resistance welding a second surface (133; 233) of said second conductive portion (13; 23) to a housing (171; 271) of said battery cell (17; 27).

13. The method of connecting a conductive cell frame (10; 20) to a battery cell (17; 27) of claim 12, **characterized in that** electrical resistance welding said first conductive portion (11; 21) to a first surface (131; 231) of said second conductive portion (13; 23) comprises:
(1) placing a protruding welding portion (155; 255) on the first surface (131; 231) of the second conductive portion (13; 23) in contact with a lower surface of the first conductive portion (11; 21);
(2) passing an electric current to the second conductive portion (13; 23) through the first conductive portion (11; 21) to raise the temperature of the protruding welding portion (155; 255) on the second conductive portion (13; 23) and the temperature of the first conductive portion (11; 21) in contact therewith; and
(3) forming a weld (12; 22) between the first conductive portion (11; 21) and the second conductive potion (13; 23).

14. The method of connecting a conductive cell frame (10; 20) to a battery cell (17; 27) of claim 12 or 13, **characterized in that** electrical resistance welding a second surface (133; 233) of said second conductive portion (13; 23) to a housing (171; 271) of said battery cell (17; 27) comprises:
(1) placing a protruding welding portion (151; 251) on the second conductive portion (13; 23) in contact with a housing (171; 271) of the battery cell (17; 27);
(2) supplying an electric current to the second conductive portion (13; 23), the protruding welding portion (151; 251) and the housing (171; 271) of the battery cell (17; 27) to increase the temperature of the protruding welding portion (151; 251) and the temperature of the housing (171; 271) of the battery cell (17; 27) in contact therewith until a pool of molten material is formed;
(3) applying a force or pressure to the housing (171; 271) of the battery cell (17; 27) through the second conductive portion (13; 23) and the protruding welding portion (151; 251) such that the protruding welding portion (151; 251) on the second conductive portion 13 is pressed into the housing (171; 271) of the battery cell (17; 27).
(4) cooling the second conductive portion (13; 23), the protruding welding portion (151; 251), and the housing (171; 271) of the battery cell (17; 27) to complete the connection between the second conduction portion (13; 23) and the battery cell (17; 27).

15. The method of connecting a conductive cell frame (10; 20) to a battery cell (17; 27) of claim 13 or 14, **characterized in that** the protruding welding portion (151; 251) is placed in contact with the housing (171; 271) at the location of an anode or a cathode of the battery cell (17; 27).
